# DEMANDE DE BREVET EUROPEEN

(11) **EP 2 200 292 A1**
(43) Date de publication de la demande: **23.06.2010**
(21) Numéro de dépôt: 09306248.7
(22) Date de dépôt: 17.12.2009
(51) Int. Cl.: H04N 5/63

(54) **Procédé de commande automatique d'un boîtier de téléviseur externe et boîtier de téléviseur externe associé**

(30) Priorité: 18.12.2008 FR 0858745
(71) Demandeur: Metronic, 37310 Tauxigny (FR)
(72) Inventeur: Lamblain, Nicolas, 35500, VITRE (FR)
(74) Mandataire: Marconnet, Sébastien

(57) **Abrégé**

La présente invention concerne un procédé de changement d'état automatique d'un boîtier (1) de téléviseur externe. Ce boîtier (1) externe est destiné à être connecté à un téléviseur (3) par l'intermédiaire d'un câble de liaison, tel qu'un câble péritel, ce câble de liaison reliant une entrée externe du téléviseur (3) au boîtier (1). Ce boîtier (1) externe est apte à acheminer un signal vidéo vers le téléviseur (3). Le procédé selon l'invention comporte l'étape de changer l'état du boîtier (1) en fonction de l'apparition ou de la disparition d'un signal caractéristique (SC) apparaissant sur une sortie vidéo (broche 19) du téléviseur (3).

## Description

. La présente invention concerne un procédé de commande automatique de boîtier de téléviseur externe ainsi que le boîtier de téléviseur externe associé. L'invention a notamment pour but de faciliter l'utilisation de ce type de boîtier en permettant notamment d'automatiser leur allumage et leur extinction.

. L'invention trouve une application particulièrement avantageuse, mais non exclusive, pour les boîtiers externes de télévision numérique connectés à un téléviseur analogique par l'intermédiaire d'une prise péritel et aptes à transformer un flux vidéo numérique terrestre ou issu du satellite en un signal vidéo appliqué sur l'entrée externe du téléviseur. Toutefois, l'invention pourrait également être mise en oeuvre avec des téléviseurs numériques connectés à un boîtier externe de génération de signaux vidéo.

. L'extinction programmée de la télévision analogique, située fin 2011 dans la plupart des pays européens va engendrer l'adoption de la télévision numérique par la totalité des foyers. A long terme les téléviseurs seront tous équipés de récepteurs numériques intégrés, ce qui facilitera l'utilisation pour l'utilisateur final. Néanmoins, un grand nombre de téléviseurs non compatibles subsistera pendant plusieurs années. La conversion de ces téléviseurs analogiques passe par l'adjonction de boîtiers externes.

. En Europe, à de rares exceptions près, ces boîtiers sont reliés au téléviseur via une liaison péritel. Ces boîtiers sont généralement appelés adaptateurs, terminaux, ou bien encore "set-top-box" par les professionnels, on conservera le terme "boîtiers" dans le reste de ce document. Ces boîtiers resteront indispensables, même à long terme, pour les foyers mal couverts par la télévision numérique terrestre, et qui doivent donc se rabattre sur une réception satellite. Les problèmes que nous décrivons, et auxquels la présente invention se propose d'apporter une solution, concernent également la télévision par câble ou par ADSL. Le public particulièrement visé est la catégorie "Senior" pour qui le basculement au tout numérique sera vu comme une contrainte.

. L'utilisation des boîtiers externes comporte plusieurs inconvénients, parmi lesquels on peut citer une consommation électrique supplémentaire et la nécessité d'utiliser une télécommande additionnelle. A ces inconvénients, s'ajoute la difficulté de faire commuter le téléviseur sur son entrée externe. En effet, bien des téléviseurs s'allument uniquement grâce à un appui sur une touche numérique de la télécommande, ce qui a pour effet de sélectionner la chaîne correspondante.

. L'utilisateur doit ensuite sélectionner manuellement l'entrée externe, soit en appuyant sur la touche adéquate, rarement repérée de manière intuitive sur la télécommande, soit en prenant soin d'attendre que le téléviseur est bien allumé avant d'allumer le boîtier. L'utilisation d'un tel boîtier passe donc par une phase d'apprentissage, occasion de nombreux tâtonnements, en particulier parmi la population âgée.

. Même lorsque l'utilisateur maîtrise la manipulation des appareils et de leur télécommande, bien des utilisateurs éteignent leur téléviseur sans se donner la peine d'éteindre le boîtier externe, puisque ça ne pose visiblement aucun problème. Outre la conséquence qu'on connaît de rendre plus difficile le prochain allumage, cette négligence a un impact certain sur la consommation électrique du foyer, et donc sur l'environnement.

. Il existe des multiprises secteur dites "maître-esclave" composées d'un socle "maître" sur lequel la consommation électrique est mesurée et comparée à un seuil. Les socles "esclave" ne sont alimentés que si la consommation mesurée sur le socle "maître" est supérieure au seuil de déclenchement. Ces multiprises permettent de couper l'alimentation électrique des boîtiers lorsque le téléviseur est en veille ou éteint. Ces multiprises possèdent toutefois deux inconvénients majeurs. Premièrement, en coupant totalement l'alimentation des boîtiers connectés sur le socle "esclave" ils ne permettent pas de forcer manuellement l'allumage du boîtier, par exemple pour enregistrer une émission qu'on ne souhaite pas regarder sur le téléviseur. Deuxièmement, la diversité des consommations en veille et en marche des téléviseurs rendent cette solution moyennement fiable.

. Un premier objectif de l'invention est d'activer automatiquement la mise en marche du boîtier lors de la mise en marche du téléviseur, et s'il y a lieu de mettre automatiquement en veille le boîtier lors de l'arrêt du téléviseur afin de minimiser la consommation électrique.

. Un deuxième objectif indépendant du premier est de faciliter les manipulations pour l'utilisateur, en faisant commuter automatiquement le téléviseur sur son entrée externe, et ce même si le boîtier externe est déjà allumé lorsque le téléviseur est lui-même allumé.

. A cet effet, dans l'invention, le décodeur analyse la sortie vidéo du du téléviseur (la broche 19 dans le cas d'un système à prise péritel) qui n'émet pas de signal lorsque le téléviseur est éteint mais émet un signal caractéristique dès que le téléviseur est en fonctionnement. Ce signal caractéristique est généralement caractérisé par une amplitude crête à crête de 0.3V minimum pour un système à prise péritel.

. Ainsi, dès que le boîtier détecte le signal caractéristique sur la sortie vidéo du téléviseur (la broche 19), le boîtier se met en marche automatiquement. A cet effet, le boîtier comporte un détecteur destiné à être relié à la sortie vidéo du téléviseur et connecté en entrée d'un processeur du boîtier apte à commander la mise en veille et le réveil du boîtier.

. En outre, après avoir été mis en marche de manière automatique, le boîtier commute de préférence le téléviseur vers son entrée externe sur laquelle est branché le boîtier. A cet effet, le décodeur est apte à activer une entrée du téléviseur (la broche 8 dans le cas d'un système à prise péritel) commandant la commutation du téléviseur.

. De préférence, la commutation du téléviseur est déclenchée après un certain délai après la détection de la mise en marche du téléviseur, afin de compenser le temps de réponse du téléviseur entre sa mise en marche et sa réceptivité à des instructions de commande.

. La commutation automatique du téléviseur vers la source externe peut s'opérer même si le boîtier est déjà en marche lors de l'allumage du téléviseur, en simulant une phase d'arrêt et de mise en marche sur l'entrée de commutation du téléviseur (la broche 8 du système péritel).

. L'invention concerne donc un procédé de changement d'état automatique d'un boîtier de téléviseur externe,
- ce boîtier externe étant destiné à être connecté à un téléviseur par l'intermédiaire d'un câble de liaison, tel qu'un câble péritel, ce câble de liaison reliant une entrée externe du téléviseur au boîtier,
- ce boîtier externe étant apte à acheminer un signal vidéo vers le téléviseur, **caractérisé en ce que** le procédé comporte l'étape de changer l'état du boîtier en fonction de l'apparition ou de la disparition d'un signal caractéristique apparaissant sur une sortie vidéo du téléviseur.

. Le boîtier peut prendre soit un état allumé dans lequel il est en fonctionnement, soit un état en veille ou éteint dans lequel il est inactif. Le changement d'état du boîtier consiste donc soit en une mise en marche du boîtier pour passer d'un état en veille ou éteint à un état allumé, ou soit en une extinction du boîtier pour passer d'un état allumé à un état en veille ou éteint.

. Selon une mise en oeuvre, le téléviseur et le boîtier étant initialement en veille ou éteints, le procédé comporte les étapes suivantes :
- détecter un signal caractéristique de mise marche apparaissant sur une sortie vidéo du téléviseur lors de la mise en marche dudit téléviseur, et
- activer la mise en marche du boîtier lorsque le signal caractéristique de mise en marche du téléviseur est détecté.

. Selon une mise en oeuvre, il comporte en outre l'étape suivante :
- le boîtier fait commuter le téléviseur vers son entrée externe sur laquelle est connectée le boîtier en appliquant une tension de commutation sur une entrée du téléviseur permettant de commander la commutation du téléviseur vers son entrée externe.

. Selon une mise en oeuvre, la tension de commutation est appliquée après une certaine durée de temporisation à compter de la détection de la mise en marche du téléviseur, cette durée de temporisation ayant pour but de tenir compte du temps de réaction du téléviseur.

. Selon une mise en oeuvre, la durée de temporisation peut être fixe, par exemple de l'ordre de 2 secondes, ou ajustable par un utilisateur.

. Selon une mise en oeuvre, si le boîtier est déjà allumé lors de la mise en marche du téléviseur, il comporte l'étape de simuler un allumage du boîtier en appliquant sur l'entrée du téléviseur permettant de commander la commutation du téléviseur d'abord une tension permettant de désélectionner l'entrée externe du téléviseur, puis une tension de commutation commandant la commutation du téléviseur vers l'entrée externe.

. Selon une mise en oeuvre, le téléviseur et le boîtier étant initialement allumés, le procédé comporte les étapes suivantes :
- détecter la disparition du signal caractéristique de mise marche apparaissant sur une sortie vidéo du téléviseur lors de l'extinction du téléviseur, et
- activer la mise en veille du boîtier lorsque la disparition du signal caractéristique de mise en marche du téléviseur est détectée.

. L'invention concerne en outre un boîtier externe de télévision numérique destiné à être relié à un téléviseur, ce boîtier externe étant apte à acheminer un signal vidéo vers le téléviseur, **caractérisé en ce qu**'il comporte :
- des moyens pour détecter la présence un signal caractéristique apparaissant sur une sortie vidéo du téléviseur, et
- des moyens pour modifier l'état du boîtier en fonction de la détection de l'apparition ou de la disparition du signal caractéristique de mise en marche du téléviseur.

. Selon une réalisation, il comporte en outre des moyens pour commuter automatiquement l'entrée vidéo du téléviseur vers le boîtier externe après que ledit boîtier ait été mis en marche.

. Selon une réalisation, les moyens pour détecter sont formés par un détecteur connecté à une entrée vidéo du boîtier, cette entrée vidéo étant destinée à être connecté à une sortie vidéo du téléviseur.

. Selon une réalisation, les moyens pour modifier l'état du boîtier sont formés par un processeur frontal de basse consommation relié au détecteur.

. L'invention sera mieux comprise à la lecture de la description qui suit et à l'examen des figures qui l'accompagnent. Ces figures ne sont données qu'à titre illustratif mais nullement limitatif de l'invention. Elles montrent :

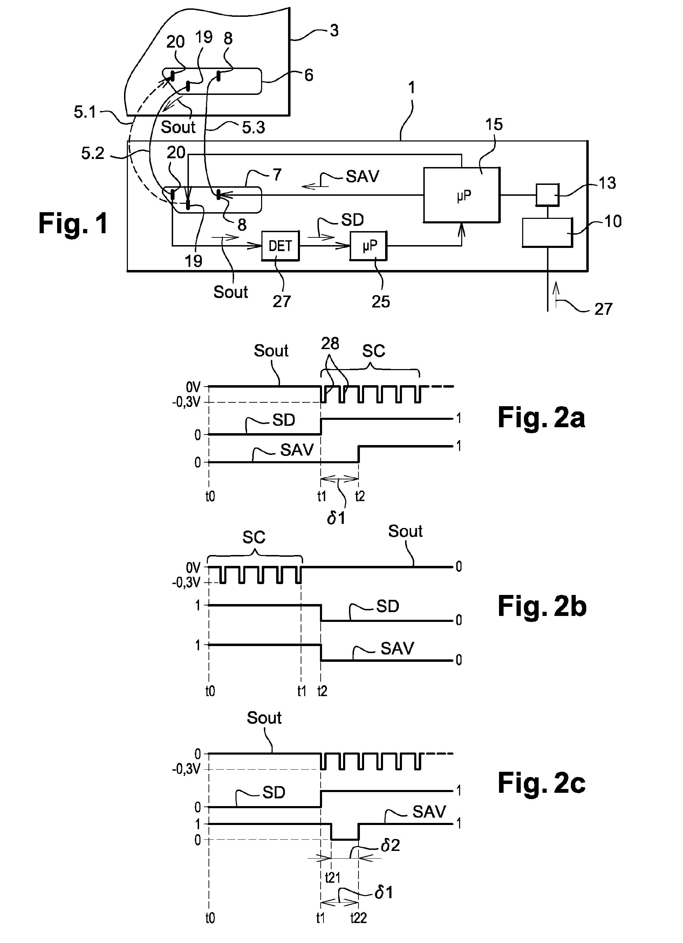

. Figure 1 : une représentation schématique d'un boîtier externe selon l'invention connecté à un téléviseur analogique par l'intermédiaire d'un câble péritel ;

. Figure 2a : des chronogrammes des signaux observables avec l'invention sur la sortie vidéo du téléviseur, en sortie du détecteur, et sur l'entrée de commutation du téléviseur lors de la détection d'une mise en marche du téléviseur ;

. Figure 2b : des chronogrammes de signaux observables avec l'invention sur la sortie vidéo du téléviseur, la sortie du détecteur, et sur l'entrée de commutation du téléviseur lors de la détection d'un arrêt du téléviseur selon l'invention ;

. Figure 2c : des chronogrammes de signaux observables sur la sortie vidéo du téléviseur, la sortie du détecteur, et sur l'entrée de commutation du téléviseur lors d'un allumage du téléviseur alors que le boîtier était déjà en état de marche.

. Les éléments identiques conservent la même référence d'une figure à l'autre.

. La Figure 1 montre un boîtier 1 numérique connecté à un téléviseur 3 analogique par l'intermédiaire d'un câble croisé de type péritel dont seules certaines connexions 5.1-5.3 sont ici représentées. A cet effet, le câble est connecté d'une part à la prise péritel 6 du téléviseur 3 et à la prise péritel 7 du boîtier 1. Ce câble péritel présente une structure croisée, ce qui permet notamment de connecter les entrées du boîtier 1 avec les sorties du téléviseur 3 et réciproquement. Dans la suite du document, les numérotations des broches péritel correspondent à leur numérotation réelle dans le standard EN 50049-1 décrivant la prise péritel.

. De manière classique, le boîtier 1 comporte un tuner 10 pour signaux vidéo numériques terrestres, ou issus du satellite permettant d'abaisser la fréquence utile (bande UHF pour DVB-T et bande BIS satellite pour DVB-S) vers une bande de base, la bande de base étant la bande de fréquence utile pour le composant avec lequel le tuner 10 est en relation : le démodulateur 13.

. Ce démodulateur 13 est apte à extraire du signal les données numériques présentes dans le signal transmis par l'opérateur. En général, le démodulateur 13 est de type QPSK pour un terminal satellite, et de type COFDM pour un terminal terrestre.

. Le démodulateur 13 est branché en entrée d'un processeur 15 principal de type DSP qui permet de décoder les flux audio et vidéo du signal démodulé par exemple suivant les standards de type MPEG. Ce processeur 15 permet également d'exécuter les programmes du boîtier 1 par exemple pour le décodage des signaux de la télécommande, la recherche des chaînes, la présentation des menus, la gestion de l'horloge, etc...

. Ainsi en fonctionnement, le tuner 10 sélectionne le canal dans le signal entrant sur le tuner qui contient tous les multiplexes (un par fréquence), chaque multiplexe comprenant toutes sortes de données, y compris vidéo, audio, etc. Le décodeur 13 démodule ensuite le signal émis sur le canal sélectionné, puis le processeur 15 principal décode le signal démodulé de type MPEG en un signal vidéo décodé. Ce signal vidéo décodé observable sur une sortie vidéo du boîtier 1 (ici la broche 19) est appliqué via la liaison 5.1 sur une entrée vidéo du téléviseur 3 (ici la broche 20), de sorte que le téléviseur 3 peut alors diffuser l'image correspondante.

. De manière connue également, le boîtier 1 peut comporter un processeur 25 frontal de basse consommation en relation avec le processeur 15 principal qui gère la mise en veille et le réveil du boîtier 1. Ce processeur 25 frontal est notamment apte à gérer les actions sur les boutons de façade du boîtier 1 et à traiter les signaux envoyés par une télécommande du boîtier (non représentée) pour la mise en marche et la mise en veille du boîtier.

. En variante, le processeur 25 frontal est intégré dans le processeur 15 principal. En variante, il est même possible de supprimer le processeur 25, le processeur 15 principal assurant alors les fonctions de mise en veille et de réveil du boîtier 1.

. Lorsque le téléviseur 3 est éteint, aucun signal n'est observable sur la borne 19 de sortie vidéo du téléviseur 3. En revanche, lorsque le téléviseur 3 est allumé, un signal caractéristique SC est observable sur la borne 19 de sortie vidéo du téléviseur 3. Lorsqu'il n'y a pas d'image affichée sur le téléviseur (écran noir), le signal caractéristique SC montré sur les figures 2a-2c présente dans un exemple une allure en créneau avec une amplitude crête à crête de 0.3V, le signal variant de 0V à -3V. Lorsque le téléviseur 3 affiche sur son écran une image, ou même de la neige, un signal vidéo se superpose au signal sans image de sorte que le signal SC varie entre -0.3V et +0.7V.

. L'invention exploite l'observation de ce signal caractéristique SC pour permettre la mise en marche et l'extinction automatique et du boîtier 1.

. A cet effet, le boîtier 1 comporte un détecteur 27 connecté d'une part à l'entrée vidéo 20 du boîtier et d'autre part au microprocesseur 25 frontal apte à réveiller le boîtier 1, l'entrée vidéo 20 du boîtier 1 étant connectée à la sortie vidéo 19 du téléviseur via la connexion 5.2.

. Ainsi, le téléviseur 3 et le boîtier 1 étant initialement à l'état arrêté ou en veille, lorsque le téléviseur 3 sera mis en marche par l'utilisateur, le détecteur 27 pourra détecter le signal caractéristique SC de la sortie vidéo 20 du téléviseur apparaissant sur la broche 19 du téléviseur et délivrer un signal au processeur 25 frontal correspondant à cette détection, de sorte que le processeur 25 pourra alors activer le processeur principal 15 pour réveiller le boîtier 1. Le détecteur 27 détecte la présence du signal caractéristique SC en détectant la présence des impulsions 28 de synchronisation des lignes vidéo dans le signal Sout, ou en mesurant les amplitudes crête-à-crête du signal Sout, la présence de SC étant détectée lorsque l'amplitude crête à crête de Sout vaut au moins 0.3V (dans le cas où il n'y a pas de diffusion d'image l'amplitude crête-à-crête de SC vaut 0.3V, et dans le cas où il y a une diffusion d'image l'amplitude crête-à-crête de SC vaut 1V).

. Dès que le détecteur 27 détecte une disparition du signal caractéristique SC, il envoie un signal au processeur 25 frontal indiquant la fin de la détection du signal SC (cet envoi peut correspondre à un envoi de signal de valeur nulle), le processeur 25 frontal pouvant alors commander l'arrêt ou la mise en veille du boîtier 1.

. En outre, une autre fonction de l'invention est la commutation automatique de la source vidéo du téléviseur vers le boîtier 1, ce qui évite à l'utilisateur d'avoir à appuyer sur une touche de la télécommande pour effectuer cette commutation. A cet effet, le processeur 15 principal est connecté sur la broche 8 du téléviseur via la connexion 5.3, le signal appliqué sur cette broche 8 par le processeur 15 permettant de commander la commutation du téléviseur 3 vers la source branchée sur la prise péritel, soit ici le boîtier 1.

. Les Figures 2 représentent les chronogrammes du signal Sout (en volts) observable sur la sortie vidéo 19 du téléviseur 3, des états logiques du signal SD observable en sortie du détecteur 27, et du signal SAV appliqué par le boîtier 1 sur la broche 8 du téléviseur 3 commandant la commutation de la source du téléviseur 3 lors de la mise en oeuvre du procédé selon l'invention. Sur les chronogrammes, SAV est une information logique (0 ou 1) alors que sur la connexion 5.3, SAV est une tension réelle qui peut être dans l'intervalle [0-0,4V] correspondant au niveau logique 0, ou dans l'intervalle [4,5-7,0V] correspondant au niveau logique 1 pour les images 16:9, ou l'intervalle [9,5-12,0V] correspondant au niveau logique 1 pour les images 4:3.

. La Figure 2a montre une mise en oeuvre de l'invention dans laquelle le processeur 25 frontal délivre un ordre d'allumage à destination du processeur 15 principal lorsqu'un allumage du téléviseur 3 est détecté, ainsi qu'un ordre de commutation automatique de la source vidéo du téléviseur 3 vers le boîtier 1 externe.

. Plus précisément, dans un état initial à l'instant t0, le téléviseur 3 et le boîtier 1 étant éteints, le signal SD de sortie du détecteur et le signal SAV appliqué sur la borne 8 sont au niveau logique 0 tandis que le signal Sout de sortie vidéo du téléviseur 3 présente une tension de 0V.

. A l'instant t1, dès qu'une mise en marche du téléviseur 3 est commandée par l'utilisateur, le détecteur 27 détecte le signal SC caractéristique observable sur la sortie vidéo 20 du téléviseur 3. Le détecteur 27 émet alors un signal SD de niveau logique 1 à destination du processeur 25 frontal qui active alors le processeur 15 principal.

. Après une certaine durée δ1 de temporisation à compter du changement d'état de la sortie du détecteur 27, le signal SAV passe à une tension de commutation permettant de commuter le téléviseur 3 en mode AV vers le boîtier 1. Ainsi à l'instant t2, le signal SAV passe au niveau logique 1. La durée δ1, qui peut être fixe ou ajustable par l'utilisateur, a pour but de tenir compte du délai pouvant exister entre le moment où le téléviseur 3 s'allume (présence d'un signal sur la sortie vidéo 19) et le moment où le téléviseur 3 est réceptif à la présence du signal de commutation provenant du boîtier 1. Dans un exemple, la durée δ1 peut valoir 2s par défaut et être ajustée par l'utilisateur le cas échéant. Dans le cas d'un téléviseur 3 très réactif la durée δ1 peut être nulle ou quasiment nulle.

. La Figure 2b montre une mise en oeuvre de l'invention dans laquelle le processeur 25 frontal délivre un ordre d'extinction à destination du processeur 15 principal lorsqu'une extinction du téléviseur 3 est détectée.

. Plus précisément, dans un état initial à l'instant t0, le téléviseur 3 et le boîtier 1 étant allumés, le signal SC caractéristique est observable sur la sortie vidéo 19, tandis que le signal SD de sortie du détecteur 27 et le signal SAV appliqué à la borne 8 sont au niveau logique 1.

. A l'instant t1, une extinction du téléviseur 3 est commandée par l'utilisateur, le détecteur 27 détecte au moment t2 situé un court instant après t1 une disparition du signal SC caractéristique. Le détecteur 27 émet alors un signal SD de niveau 0 à destination du processeur 25 frontal qui commande alors l'arrêt du processeur 15 principal. Le signal SD peut passer à 0 au plus tôt lorsqu'est détectée la première impulsion manquante du signal SC. En outre, le signal SAV passe à un état 0 (à une tension comprise entre 0V et 0.4V) correspondant à une dé-sélection de l'entrée externe du téléviseur 3.

. La Figure 2c montre une mise en oeuvre de l'invention permettant une commutation automatique de la source du téléviseur vers le boîtier 1, alors que le boîtier 1 est déjà allumé lors de la mise en marche du téléviseur 3. Ce cas se présente typiquement lorsque l'utilisateur a allumé le boîtier 1 avant d'allumer le téléviseur 3.

. Plus précisément, à l'instant t0, le téléviseur 3 étant éteint et le boîtier 1 étant allumé, le signal Sout de sortie vidéo du téléviseur 3 présente une tension de 0V, tandis que le signal SD de sortie du détecteur 27 est à l'état 0, et le signal SAV appliqué sur la broche 8 est à l'état 1.

. A l'instant t1, dès qu'une mise en marche du téléviseur 3 est commandée par l'utilisateur, le détecteur 27 détecte sur son entrée que le signal Sout prend la forme du signal caractéristique SC de mise en marche du téléviseur 3. Le détecteur 27 émet alors un signal SD de niveau 1 à destination du processeur 25 frontal, mais cela n'a aucun impact sur le fonctionnement du boîtier 1 qui est déjà allumé.

. Ensuite, à l'instant t21, le processeur 25 frontal délivre un ordre d'allumage à destination du processeur 15 principal qui interprète cet ordre comme la simulation d'un allumage du boîtier 1, en provoquant, par exemple, un cycle arrêt/marche du signal SAV. Ainsi, à l'instant t21, on fait passer le signal SAV à un état 0 de non sélection de l'entrée externe du téléviseur 3 (la broche 8 est mise à l'état 0 à une tension comprise entre 0V et 0.4V), puis à l'instant t22, le signal SAV passe à la tension de commutation (niveau 1) commandant le téléviseur 3 de sélectionner l'entrée externe du téléviseur 3 (la broche 8 est mise à une tension proche de 6V ou 12V selon le format de l'image). La durée δ2 de l'impulsion de remise à 0 entre les instants t21 et t22 peut être très brève, de l'ordre de quelques millisecondes, voire nulle.

. Comme précédemment, l'application de la tension de commutation à l'instant t22 (passage de 0 à 1 du signal SAV) se produit après le moment où le téléviseur 3 est réceptif à la présence du signal de commutation provenant du boîtier 1 (le délai δ1 s'écoule entre t1 et t22).

. On note que s'il n'y avait pas de remise à 0 temporaire du signal SAV pendant la durée δ2 et que le signal SAV appliqué à la borne 8 était resté à 1, le téléviseur 3 ne pourrait pas détecter de changement d'état de 0 à 1 qui permet de commander la commutation de la source du téléviseur 3 vers la source externe du boîtier 1.

. Bien entendu, le détecteur 27 peut prendre la forme d'un composant électronique ou d'une fonction logicielle mise en oeuvre par le processeur 15 ou 25.

. On notera que la commutation automatique de la source vidéo du téléviseur 3 vers la source vidéo externe du boîtier 1 n'est pas nécessairement mis en oeuvre en combinaison avec la mise en marche et l'extinction automatique du boîtier 1. En effet, ces deux procédés peuvent être mis en oeuvre indépendamment l'un de l'autre.

## Revendications

1. Procédé de changement d'état automatique d'un boîtier (1) de téléviseur externe de réception de télévision numérique apte à acheminer un signal vidéo vers le téléviseur, ce boîtier (1) externe étant destiné à être connecté à un téléviseur (3) par l'intermédiaire d'un câble de liaison, tel qu'un câble péritel, ce câble de liaison reliant une entrée externe du téléviseur (3) au boîtier (1),
**caractérisé en ce que** le téléviseur (3) et le boîtier (1) étant initialement en veille ou éteints, il comporte les étapes suivantes :
- détecter un signal (SC) caractéristique de mise marche apparaissant sur une sortie vidéo (broche 19) du téléviseur (3) lors de la mise en marche dudit téléviseur (3),
- activer la mise en marche du boîtier (1) lorsque le signal (SC) caractéristique de mise en marche du téléviseur (3) est détecté, et
- faire commuter automatiquement le téléviseur (3) vers son entrée externe sur laquelle est connectée le boîtier (1) en appliquant une tension de commutation (SAV) sur une entrée (broche 8) du téléviseur permettant de commander la commutation du téléviseur (3) vers son entrée externe.

2. Procédé selon la revendication 1, **caractérisé en ce que** la tension (SAV) de commutation est appliquée après une certaine durée (δ1) de temporisation à compter de la détection de la mise en marche du téléviseur (3), cette durée (δ1) de temporisation ayant pour but de tenir compte du temps de réaction du téléviseur (3).

3. Procédé selon la revendication 2, **caractérisé en ce que** la durée (δ1) de temporisation peut être fixe, par exemple de l'ordre de 2 secondes, ou ajustable par un utilisateur.

4. Procédé selon l'une des revendications 1 à 3, **caractérisé en ce que** si le boîtier (1) est déjà allumé lors de la mise en marche du téléviseur (3), il comporte l'étape de simuler un allumage du boîtier (1) en appliquant sur l'entrée (broche 8) du téléviseur (3) permettant de commander la commutation du téléviseur (3) d'abord une tension permettant de désélectionner l'entrée externe du téléviseur (3), puis une tension de commutation commandant la commutation du téléviseur (3) vers l'entrée externe.

5. Procédé selon l'une des revendications 1 à 4, **caractérisé en ce que** le téléviseur (3) et le boîtier (1) étant initialement allumés, le procédé comporte les étapes suivantes :
- détecter la disparition du signal caractéristique (SC) de mise marche apparaissant sur une sortie vidéo (borne 19) du téléviseur (3) lors de l'extinction du téléviseur (3), et
- activer la mise en veille du boîtier (1) lorsque la disparition du signal (SC) caractéristique de mise en marche du téléviseur (3) est détectée.

6. Boîtier (1) externe de télévision numérique destiné à être relié à un téléviseur (3), ce boîtier (1) externe étant apte à acheminer un signal vidéo vers le téléviseur (1), **caractérisé en ce qu'**il comporte :
- des moyens (27) pour détecter la présence un signal (SC) caractéristique apparaissant sur une sortie vidéo (broche 19) du téléviseur,
- des moyens (15, 25) pour détecter un signal (SC) caractéristique de mise marche apparaissant sur une sortie vidéo (broche 19) du téléviseur (3) lors de la mise en marche dudit téléviseur (3),
- des moyens (25) pour activer la mise en marche du boîtier (1) lorsque le signal (SC) caractéristique de mise en marche du téléviseur (3) est détecté et
- des moyens (15) pour commuter automatiquement l'entrée vidéo du téléviseur (3) vers le boîtier (1) externe après que ledit boîtier (1) ait été mis en marche.

7. Boîtier selon la revendication 6 ou 7, **caractérisé en ce que** les moyens (27) pour détecter sont formés par un détecteur (27) connecté à une entrée vidéo (broche 20) du boîtier (1), cette entrée vidéo étant destinée à être connecté à une sortie vidéo (broche 19) du téléviseur.

8. Boîtier selon la revendication 6 ou 7, **caractérisé en ce que** les moyens pour activer la mise en marche du boîtier (1) sont formés par un processeur (25) frontal de basse consommation relié au détecteur (27).
